# EUROPÄISCHE PATENTSCHRIFT

(11) **EP 3 142 879 B1**
(45) Veröffentlichungstag und Bekanntmachung des Hinweises auf die Patenterteilung: **01.04.2020**
(21) Anmeldenummer: 15716557.2
(22) Anmeldetag: 21.04.2015
(51) Int. Cl.: B60J 7/02, B60J 7/043

(54) **ANORDNUNG MIT EINEM DECKEL FÜR EIN FAHRZEUGDACH**
ARRANGEMENT WITH A COVER FOR A VEHICLE ROOF
DISPOSITION D'UN COUVERCLE POUR UN TOIT DE VÉHICULE

(30) Priorität: 14.05.2014 DE 102014106812; 13.08.2014 DE 102014111539
(43) Veröffentlichungstag der Anmeldung: 22.03.2017
(73) Patentinhaber: Webasto SE, 82131 Stockdorf (DE)
(72) Erfinder: HÖLZEL, Dominik, 82140 Olching (DE)
(74) Vertreter: Epping - Hermann - Fischer
(86) Internationale Anmeldenummer: PCT/EP2015/058576
(87) Internationale Veröffentlichungsnummer: WO 2015/172979

(56) Entgegenhaltungen:
- EP-A1- 2 650 156
- EP-A1- 2 727 755
- EP-A2- 1 493 601
- WO-A1-2008/017294
- DE-A1-102012 025 071
- DE-U1-202010 012 974

## Beschreibung

Die Erfindung betrifft eine Anordnung mit einem Deckel für ein Fahrzeugdach, der ausgehend von einer Schließstellung zum Verschließen einer Dachöffnung zum Öffnen durch Ausstellmittel in seinem hinteren Bereich anhebbar und nach hinten in eine Offenstellung verschiebbar ist.

Derartige Anordnungen mit einem Deckel für ein Fahrzeugdach sind aus dem Stand der Technik vielfach bekannt. Typischerweise wird beim Öffnungsvorgang ein Antriebsschlitten in Fahrzeuglängsrichtung nach hinten verschoben. In seitlichen Bereichen des Deckels sind Ausstellmittel vorgesehen, um den Deckel in eine Lüfterstellung anzuheben, bevor er weiter nach hinten in eine Offenstellung zum Freigeben der Dachöffnung verschoben wird.

Aus der EP 2 650 156 A1 ist eine Anordnung für ein Fahrzeugdach bekannt, welche ein Frontpanel 6 zum Öffnen eines vorderen Bereichs einer Dachöffnung 4 sowie ein Rückpanel 7 zum Öffnen eines hinteren Bereichs der Dachöffnung 4 aufweist.

Aus der WO 2008/017294 A1 ist ebenfalls eine Anordnung für ein Fahrzeugdach bekannt. Aus der DE 20 2010 01294 U1 ist Offendachkonstruktion für ein Fahrzeug bekannt. Aus der EP 1 493 601 A2 ist ein Fahrzeugdach mit einem Deckel bekannt. Aus der 10 2012 025071 A1 ist verglastes Dach eines Kraftfahrzeugs bekannt.

Eine Aufgabe, die der Erfindung zugrunde liegt, ist es, eine Anordnung mit einem Deckel für ein Fahrzeugdach zu beschreiben, welches sich durch eine geringe Beanspruchung von Bauraum auszeichnet.

Erfindungsgemäß wird eine Anordnung mit einem Deckel für ein Fahrzeugdach beschrieben, der ausgehend von einer Schließstellung zum Verschließen einer Dachöffnung zum Öffnen durch Ausstellmittel in seinem hinteren Bereich anhebbar und nach hinten über das Fahrzeugdach in eine Offenstellung verschiebbar ist. Die Ausstellmittel weisen eine in Fahrzeuglängsrichtung mittels eines Antriebs in einer Führungsschiene verschiebbaren Schlitten auf, welcher ein erstes Koppelelement und ein zweites Koppelelement aufweist. Weiter weisen die Ausstellmittel einen mit dem Deckel mechanisch gekoppelten Deckelträger auf, welcher bezüglich der Fahrzeuglängsrichtung eine vordere Kulisse und eine hinter der vorderen Kulisse angeordnete hintere Kulisse aufweist. In Schließstellung des Deckels ist das zweite Koppelelement im Eingriff mit der hinteren Kulisse. Die Ausstellmittel sind derart ausgebildet, dass ausgehend von der Schließstellung des Deckels bei einem Verschieben des Schlittens in Fahrzeuglängsrichtung nach hinten mittels der hinteren Kulisse zunächst eine Bewegung des Schlittens relativ zu dem Deckel freigegeben ist sowie ein Ausstellen des Deckels in Vertikalrichtung steuerbar ist. Bei einem weiteren Verschieben ist das erste Koppelelement in die vordere Kulisse eingekoppelt und mittels der vorderen Kulisse eine Mitnahme des Deckelträgers durch den Schlitten relativ zur Führungsschiene steuerbar.

Das Verschieben des Deckels über das Fahrzeugdach bedeutet, dass der Deckel nach einem Anheben oder Ausstellen im Bereich einer hinteren Kante des Deckels über eine Außenseite des Fahrzeugdachs geschoben wird. Bevorzugt handelt es sich bei der Anordnung um eine Anordnung für ein Spoilerdach.

Die verwendeten Ortsangaben oder Richtungsangaben wie "hinten" oder "vorne" sind auf die Fahrzeuglängsrichtung bezogen. Die Fahrzeuglängsrichtung kann auch als horizontale Richtung oder X-Richtung bezeichnet werden. Das Ausstellen bzw. Anheben des Deckels erfolgt im Wesentlichen in einer Vertikalrichtung bzw. Z-Richtung. Unter dem hinteren Bereich des Deckels ist beispielsweise der Bereich zu verstehen, welcher ausgehend von einer Mitte des Deckels einem Fahrzeugheck zugewandt ist.

Die Anordnung sieht vor, dass der Schlitten zwei Koppelelemente aufweist, denen jeweils eine bezüglich des Deckelträgers ortsfeste Kulisse zugeordnet ist. Dabei ist in Fahrzeuglängsrichtung hinter der vorderen Kulisse die hintere Kulisse des Deckelträgers angeordnet. Analog dazu ist das zweite Koppelelement in Fahrzeuglängsrichtung hinter dem ersten Koppelelement angeordnet.

Wie bereits erwähnt ist in Schließstellung des Deckels das zweite Koppelelement im Eingriff mit der hinteren Kulisse. Ausgehend von der Schließstellung des Deckels ist beim Verschieben des Schlittens mittels der hinteren Kulisse zunächst eine Bewegung des Schlittens relativ zu dem Deckel bzw. dem Deckelträger freigegeben und ein Ausstellen des Deckels in der Vertikalrichtung steuerbar. Insbesondere ist ein Anheben des Deckels im vorderen Bereich steuerbar. Bei einem weiteren Verschieben des Schlittens kann das erste Koppelelement in die vordere Kulisse einkoppeln, wobei die vordere Kulisse eine Mitnahme des Deckelträgers durch den Schlitten relativ zur Führungsschiene steuert. Dabei ist die vordere Kulisse derart ausgestaltet, dass nach dem Einkoppeln des ersten Koppelelements in die vordere Kulisse diese eine Relativbewegung in X-Richtung zwischen dem Deckelträger und dem Schlitten verriegelt. Insbesondere führt der Schlitten mittels des ersten Koppelelements den Deckelträger in X-Richtung, sobald der Deckelträger und der Schlitten keine oder nahezu keine Relativbewegung in X-Richtung mehr machen. Dabei ist lediglich eine Relativbewegung zwischen dem Deckelträger und dem Schlitten in Vertikalrichtung freigegeben. In anderen Worten ausgedrückt findet zum Ausstellen und Mitnehmen des Deckelträgers eine Übergabe von dem zweiten Koppelelement auf das erste Koppelelement statt. Dabei ist es optional möglich, dass beide Koppelelemente während des Verschiebens des Schlittens über eine kurze Zeitspanne gleichzeitig die Mitnahme des Deckelträgers in X-Richtung steuern.

Beim Einkoppeln oder nach dem Einkoppeln des ersten Koppelelements in die vordere Kulisse kann das zweite Koppelelement aus der hinteren Kulisse auskoppeln bzw. diese verlassen.

Durch das Vorsehen von zwei Kulissen sowie zwei Koppelelementen ist es möglich, dass die hintere Kulisse in ihrer Bahn gekürzt wird. Insbesondere kann auf einen zusätzlichen Abschnitt der hinteren Kulisse verzichtet werden, welcher eine Mitnahme des Deckelträgers durch den Schlitten, also eine X-Verriegelung zwischen dem Schlitten und dem Deckelträger steuert. Ein solcher Abschnitt würde im Wesentlichen in Vertikalrichtung verlaufen und benötigt somit Bauraum in Z-Richtung. In Schließstellung des Deckels würde dieser Abschnitt im Regelfall unter dem Schienenboden der Führungsschiene in Z-Richtung durchstehen und somit Bauraum einer Fahrgastzelle des Fahrzeugs reduzieren. Zudem müssten in der Führungsschiene bzw. deren Boden entsprechende Aussparungen oder Ausnehmungen vorgesehen werden, beispielsweise damit dieser zusätzliche Abschnitt relativ zur Führungsschiene während des Ausstellens des Deckels verschoben werden kann.

Bei der erfindungsgemäßen Anordnung ist die X-Verriegelung bzw. Mitnahme des Deckelträgers durch den Schlitten hauptsächlich auf die vordere Kulisse übertragen, sodass die Funktion des Ausstellens des Deckels und des Mitnehmens des Deckels auf zwei Kulissen aufgeteilt ist. Ein weiterer Vorteil ist, dass für das erste Koppelelement keine voll ausgebildete Kulissenbahn im Deckelträger vorgesehen werden muss, sondern nur im Bereich der Mitnahme in X-Richtung. Hauptsächlich bedeutet in diesem Zusammenhang, dass optional, wie oben erwähnt, kurzzeitig beide Koppelelemente zur Mitnahme des Deckelträgers in X-Richtung beitragen können.

Gemäß einer Ausgestaltung der Erfindung weist die vordere Kulisse in Schließstellung des Deckels einen Verlauf auf, bei welchem ein Abstand zwischen der vorderen Kulisse und dem Deckel in Fahrzeuglängsrichtung nach hinten zunächst gleich bleibt und sich anschließend verändert. Dadurch lässt sich die Mitnahme des Deckelträgers durch den Schlitten steuern. Dabei wird ein besonders reibungsarmes und mit möglichst wenig Kräften verbundenes Einkoppeln und Mitnehmen über das erste Koppelelement ermöglicht. Unter dem Gleichbleiben des Abstands wird dabei verstanden, dass sich der Abstand gar nicht oder lediglich in sehr geringem Maße, beispielsweise unter einem kleinen Winkel bezüglich der Fahrzeuglängsrichtung, verändert. Beispielsweise kann sich der Abstand zu dem Deckel nach hinten verringern oder vergrößern.

Gemäß einer weiteren Ausgestaltung der Erfindung weist der Verlauf der vorderen Kulisse bezüglich der Fahrzeuglängsrichtung nach hinten einen vorderen Abschnitt auf, in welchem ein Abstand zwischen der vorderen Kulisse und dem Deckel zunächst gleich bleibt, einen mittleren Abschnitt, in welchem sich der Abstand zwischen der vorderen Kulisse und dem Deckel vergrößert, und einen hinteren Abschnitt, welcher in Vertikalrichtung verläuft. Vertikalrichtung bedeutet in diesem Zusammenhang, dass der Verlauf im Wesentlichen senkrecht zur Längserstreckung der Führungsschiene, insbesondere einer Tangentialebene der Längserstreckung, verläuft. Dies schließt einen Verlauf unter einem kleinen Winkel, beispielsweise bis zu 20°, bezüglich der Z-Richtung ein. Anders ausgedrückt verläuft der hintere Abschnitt im Wesentlichen quer zum dem vorderen Abschnitt.

Gemäß einer weiteren Ausgestaltung der Erfindung befindet sich in Lüfterstellung des Deckels das erste Koppelelement in dem vorderen Abschnitt der vorderen Kulisse oder beim Einkoppeln in den vorderen Abschnitt. Als Lüfterstellung wird der Zustand des Deckels bezeichnet, bei welchem der Deckel in seinem hinteren Bereich angehoben bzw. ausgestellt ist, bevor er anschließend über das Fahrzeugdach hinweggeschoben wird. Das erste Koppelelement befindet sich also in Lüfterstellung im vorderen Abschnitt der vorderen Kulisse oder beim Einkoppeln in diesen und kann somit bei einem weiteren Verschieben des Schlittens in Fahrzeuglängsrichtung nach hinten in den hinteren Abschnitt der vorderen Kulisse fahren und die Mitnahme des Deckelträgers durch den Schlitten steuern. Beim Einkoppeln bedeutet, dass sich das erste Koppelelement noch nicht in dem vorderen Abschnitt oder gerade beim Einkoppeln in den vorderen Abschnitt befindet.

Gemäß einer weiteren Ausgestaltung der Erfindung weist die hintere Kulisse in Schließstellung des Deckels bezüglich der Fahrzeuglängsrichtung nach hinten einen Verlauf auf, bei welchem der Abstand zwischen der hinteren Kulisse und dem Deckel in Fahrzeuglängsrichtung nach hinten zunächst gleich bleibt und sich anschließend verändert. Dabei ist das Gleichbleiben bzw. Verändern des Abstands analog zu oben zu verstehen.

Durch einen derartigen Verlauf der hinteren Kulisse ist es möglich, dass bei einem Verschieben des Schlittens ausgehend von der Schließstellung ein Anheben des Deckels im vorderen Bereich bzw. an dessen vorderer Kante gesteuert wird. Dabei sorgt die Veränderung des Abstands für die entsprechende Verschiebung des Deckels in Vertikalrichtung.

Gemäß einer weiteren Ausgestaltung der Erfindung weist der Verlauf der hinteren Kulisse bezüglich der Fahrzeuglängsrichtung nach hinten einen ersten Abschnitt auf, in welchem der Abstand zwischen der Schlittenkulisse und dem Deckel gleich bleibt, und einen an den ersten Abschnitt anschließenden zweiten Abschnitt auf, in welchem sich der Abstand zwischen der hinteren Kulisse und dem Deckel vergrößert. Die Differenz der Abstände im ersten Abschnitt und im zweiten Abschnitt entspricht einem Anheben des Deckels in der Vertikalrichtung.

Gemäß einer weiteren Ausgestaltung der Erfindung befindet sich in Schließstellung des Deckels das zweite Koppelelement in dem ersten Abschnitt der hinteren Kulisse. Dadurch ist es möglich, dass bei Verschieben des Schlittens in Fahrzeuglängsrichtung nach hinten das Ausstellen des Deckels in Vertikalrichtung im vorderen Bereich des Deckels gesteuert wird.

Gemäß einer weiteren Ausgestaltung der Erfindung ist das zweite Koppelelement in der Offenstellung des Deckels von der hinteren Kulisse entkoppelt. Dadurch, dass das erste Koppelelement die Mitnahme in X-Richtung steuert, kann das zweite Koppelelement aus der hinteren Kulisse entkoppeln. Dabei kann das zweite Koppelelement bereits dann von der hinteren Kulisse entkoppeln, wenn der Schlitten den Deckelträger über das erste Koppelelement mitnimmt. Dadurch ist es wie eingangs erwähnt möglich, dass die hintere Kulisse einen verkürzten Verlauf aufweist, insbesondere keine oder nur sehr kurzen Verlauf in vertikaler Richtung.

Gemäß einer weiteren Ausgestaltung der Erfindung ist das erste Koppelelement nach der Mitnahme des Deckelträgers durch den Schlitten nahe in Fahrzeuglängsrichtung hinter einem Gleitelement des Deckelträgers angeordnet. Der Deckelträger ist in seinem vorderen Bereich mittels des Gleitelements in einer Führungskulisse geführt und am Fahrzeugdach abgestützt. Dabei ist das erste Koppelelement nach Mitnahme des Deckelträgers durch den Schlitten nahe an diesem Gleitelement angeordnet. Nahe bedeutet in diesem Zusammenhang, dass das erste Koppelelement zwischen dem Gleitelement des Deckelträgers und dem zweiten Koppelelement angeordnet ist. Insbesondere sind beide Koppelelemente näher an dem Gleitelement als an einem hinteren Ende des Deckelträgers angeordnet.

Dadurch, dass das erste Koppelelement nahe an dem Gleitelement des Deckelträgers angeordnet ist, macht das erste Koppelelement beim Verfahren des Schlittens und Schieben des Deckelträgers über das Fahrzeugdach in Z-Richtung kaum eine Bewegung. Dadurch kann die Kulissenbahn für die Mitnahme des Deckelträgers durch den Schlitten S der vorderen Kulisse ebenfalls sehr kurz ausgestaltet sein, insbesondere in Z-Richtung.

Weitere Ausgestaltungen der Erfindung sind in den Unteransprüchen und in der nachfolgenden ausführlichen Beschreibung eines Ausführungsbeispiels offenbart.

Das Ausführungsbeispiel ist unter Zuhilfenahme der angehängten Figuren nachfolgend beschrieben. Elemente oder Merkmale gleicher Konstruktion oder Funktion sind figurenübergreifend mit den gleichen Bezugszeichen versehen. Bereits mit Hilfe von Bezugszeichen beschriebene Elemente oder Merkmale sind nicht zwingend in allen Figuren mit Bezugszeichen versehen.

In den Figuren zeigen:
- Figur 1: eine schematische, perspektivische Ansicht eines Fahrzeugs,
- Figur 2: eine schematische Seitenansicht einer Anordnung mit einem Deckel für ein Fahrzeugdach des Fahrzeugs,
- Figur 3: eine vergrößerte, teilgeschnittene Seitenansicht der Anordnung in einer Schließstellung,
- Figur 4: eine vergrößerte, teilgeschnittene Seitenansicht der Anordnung in einer Lüfterstellung,
- Figur 5: eine vergrößerte, teilgeschnittene Seitenansicht der Anordnung mit einer teilweise ausgestellten Vorderkante des Deckels,
- Figur 6: eine vergrößerte, teilgeschnittene Seitenansicht der Anordnung mit ausgestellter Vorderkante des Deckels,
- Figur 7: eine weitere schematische Seitenansicht der Anordnung in der Lüfterstellung,
- Figur 8: eine weitere schematische Seitenansicht der Anordnung in einer teilweisen Offenstellung, und
- Figur 9: eine weitere schematische Seitenansicht der Anordnung in der Offenstellung.

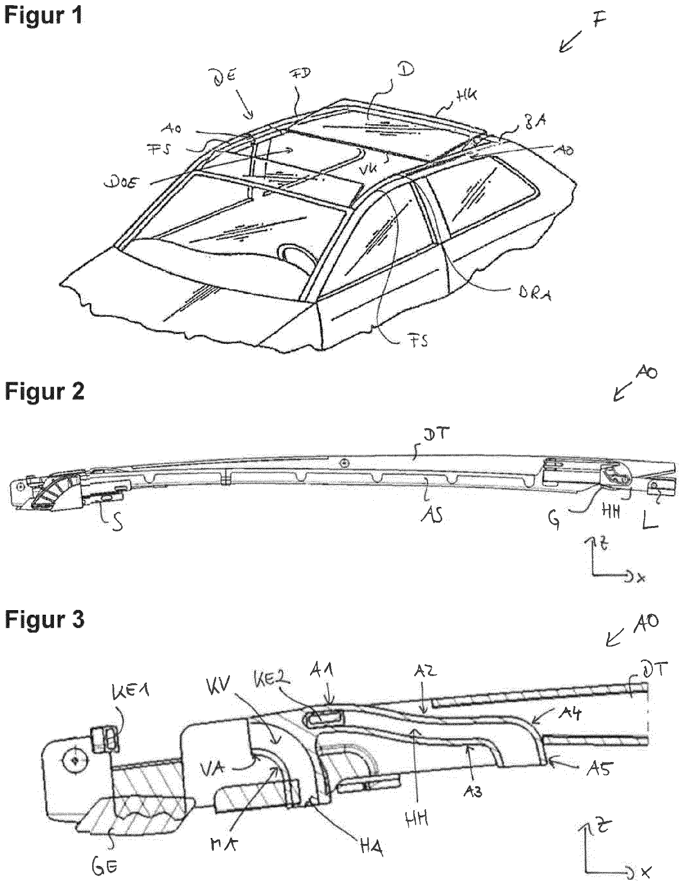

Figur 1 zeigt eine schematische, perspektivische Ansicht eines Fahrzeugs F mit einem Fahrzeugdach FD. Das Fahrzeugdach FD weist einen fahrzeugfesten Befestigungsabschnitt BA auf, der als Dachschale ausgebildet ist. Der fahrzeugfeste Befestigungsabschnitt BA ist mit einer Dachöffnung DOE versehen, die mittels eines verstellbaren, beweglichen Dachelements DE wahlweise verschlossen oder zumindest teilweise freigebbar ist.

Die Dachöffnung DOE wird von einem an dem Fahrzeugdach FD ausgebildeten Dachrahmenabschnitt DRA begrenzt. Der Dachrahmenabschnitt DRA hat vorzugsweise beidseitig angeordnete Anordnungen AO mit Führungsschienen FS. Das Dachelement DE ist relativ bezüglich der Führungsschienen FS verschiebbar im Bereich des Befestigungsabschnitts BA gelagert.

Das bewegliche Dachelement DE hat einen Deckel D und ist über einen Deckelträger und Anordnungen AO in den Führungsschienen FS verschiebbar gelagert. Der Deckel D ist vorzugsweise als Glasdeckel ausgebildet.

Der Deckel D ist aus einer Schließstellung zum Verschließen der Dachöffnung DOE in eine Offenstellung zu verschieben, um so die Dachöffnung DOE des Fahrzeugdachs FD freizugeben.. Hierzu weisen die Anordnungen AO Ausstellmittel auf. Zum Öffnen wird der Deckel D über einen hinteren Teil des Fahrzeugdachs FD geschoben. Dazu ist es erforderlich, dass der Deckel D zunächst angehoben wird, da er in Schließstellung bündig mit der Oberseite des Fahrzeugdachs FD abschließt. Bei einem typischen Bewegungsablauf wird zunächst eine hintere Kante HK des Deckels D ausgestellt. Diese Zwischenposition wird auch als Lüfterstellung bezeichnet. Im weiteren Verlauf der Öffnungsbewegung wird der Deckel D danach in Fahrzeuglängsrichtung nach hinten über das Fahrzeugdach FD in die Offenstellung verschoben. Dabei wird zudem auch der Deckel D im Bereich einer der Hinterkante HK gegenüberliegenden Vorderkante VK vollständig angehoben.

Dieser typische Bewegungsablauf wird mit Hilfe der Anordnung AO für ein Fahrzeugdach FD bewerkstelligt, welche anhand der folgenden Figuren 2 bis 9 genauer beschrieben werden. Dabei ist in den Figuren 2 bis 9 jeweils nur eine Anordnung AO auf einer Seite der zugehörigen Mechanik dargestellt. Alle Teile sind jedoch spiegelbildlich zu einer Mittellängsebene des Fahrzeugs F auf beiden Seiten der Dachöffnung DOE angeordnet. Die Anordnung AO kann auch als Ausstellvorrichtung bezeichnet werden.

Es gilt zu beachten, dass in den Figuren 2 bis 9 lediglich der Deckelträger DT dargestellt ist, welcher mit dem Deckel D mechanisch fest gekoppelt ist. Somit ist der Deckel D mit Hilfe der Ausstellmittel direkt gekoppelt und bewegbar. Ein Verschieben des Deckels D ist demnach gleichbedeutend mit einem Verschieben des Deckelträgers DT.

Weiter ist in den Figuren 2 bis 9 jeweils ein Koordinatensystem dargestellt, welches die Richtungen Z und X zeigt. Die X-Richtung kann dabei auch als Fahrzeuglängsrichtung oder Horizontalrichtung bezeichnet werden. Die Z-Richtung kann auch als Vertikalrichtung bezeichnet werden.

Figur 2 zeigt eine schematische Seitenansicht einer Anordnung AO. Die Anordnung AO umfasst einen Schlitten S, der in Fahrzeuglängsrichtung nach hinten mittels eines Antriebs in einer Führungsschiene FS (nicht dargestellt) verschiebbar ist. Weiter umfasst die Anordnung AO eine Ausstellstange AS, ein ortsfestes Lager L sowie einen hinteren Ausstellhebel HH. Der hintere Ausstellhebel HH ist schwenkbar mit einem Gleiter G gekoppelt, welcher verschiebbar an dem Deckelträger DT geführt ist. Somit ist der hintere Ausstellhebel HH schwenkbar mit dem Deckel D gekoppelt. In Figur 2 ist die Schließstellung des Deckels D dargestellt.

Wird ausgehend von dieser Schließstellung des Deckels D der Schlitten S in Fahrzeuglängsrichtung nach hinten verschoben, so wird die Ausstellstange AS zunächst ebenfalls parallel zur Fahrzeuglängsrichtung nach hinten verschoben, da die Ausstellstange AS mit dem Schlitten S mechanisch gekoppelt ist. Dabei wird der hintere Ausstellhebel HH bezüglich des Lagers L verschwenkt, sodass der Deckelträger DT bzw. der Deckel D im Bereich der hinteren Kante HK ausgestellt bzw. in Z-Richtung angehoben wird. In diesem Zustand befindet sich der Deckel D in der Lüfterstellung. Wird der Schlitten S weiter nach hinten verschoben, wird der Schlitten S von der Ausstellstange AS entkoppelt, wobei gleichzeitig das vordere Ende der Ausstellstange AS durch einen nicht näher beschriebenen Verriegelungsmechanismus ortsfest bezüglich der Führungsschiene FS festgelegt wird. Dies bedeutet, dass der hintere Ausstellhebel HH ebenfalls ortsfest bezüglich der Führungsschiene FS in der ausgestellten Position arretiert ist. Bei dem weiteren Verschieben des Schlittens S nach dem Verriegeln der Ausstellstange AS nimmt dieser den Deckelträger DT in einem vorderen Bereich in X-Richtung mit, wobei der Deckel D im vorderen Bereich in Vertikalrichtung vollständig angehoben wird. Dabei schiebt der Schlitten S den Deckelträger DT und somit den Deckel D über das Fahrzeugdach D in die Offenstellung. Wie beschrieben, ist hierzu der hintere Ausstellhebel HH verschiebbar über den Gleiter G mit dem Deckelträger DT gekoppelt, sodass der Deckel D relativ bezüglich des arretierten, hinteren Ausstellhebels HH verschoben werden kann.

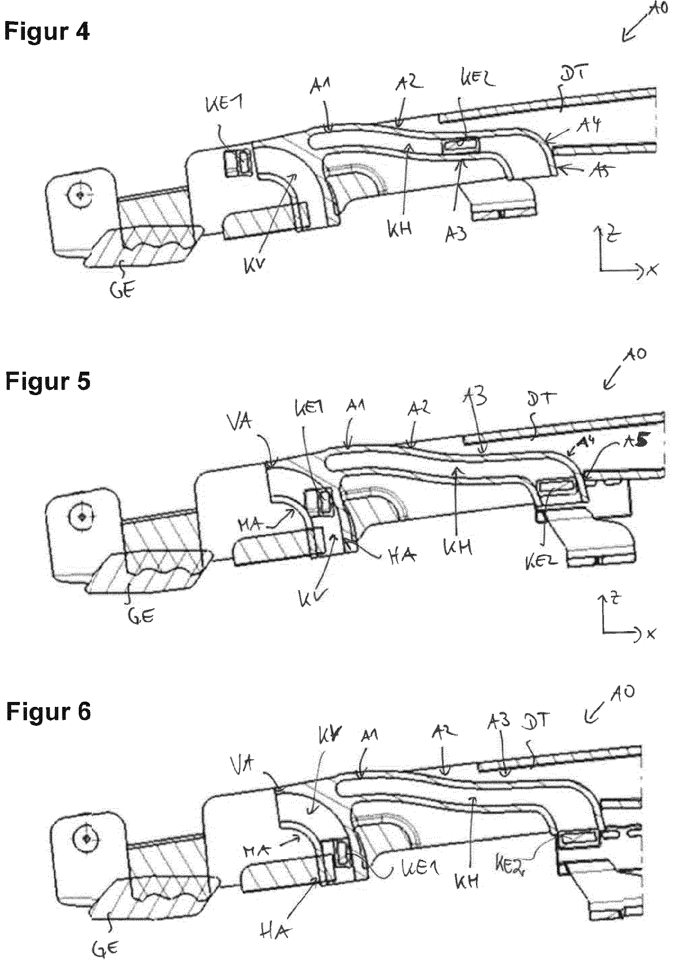

In den folgenden Figuren 3 bis 6 wird detailliert auf die Ausstellmittel der Anordnung AO in einem vorderen Bereich des Deckelträgers DT eingegangen. Figur 3 zeigt dabei die Anordnung AO in Schließstellung des Deckels, Figur 4 zeigt die Anordnung AO in der Lüfterstellung des Deckels D, Figur 5 zeigt die Anordnung AO mit einer teilweise ausgestellten Vorderkante VK des Deckels D und Figur 6 zeigt die Anordnung AO mit ausgestellter Vorderkante VK des Deckels D. In den Figuren 3 bis 6 sind jeweils teilweise geschnittene Seitenansichten der Anordnung AO schematisch dargestellt. Aus Gründen der Übersichtlichkeit ist die Ausstellstange AS nicht dargestellt. Zudem ist der Schlitten S nur teilweise oder gar nicht dargestellt.

Der Deckelträger DT weist eine vordere Kulisse KV und eine in Fahrzeuglängsrichtung hinter der vorderen Kulisse KV angeordnete hintere Kulisse KH auf. Der Deckelträger DT weist in seinem vorderen Bereich ein vorderes Gleitelement GE auf, mit welchem dieser relativ bezüglich der Führungsschiene FS (nicht dargestellt) verschiebbar in einer nicht näher beschriebenen Art innerhalb einer fahrzeugfesten Kulisse gelagert ist (nicht dargestellt). Der im Wesentlichen nicht dargestellte Schlitten S besitzt zwei Koppelelemente, nämlich ein erstes Koppelelement KE1 und ein zweites Koppelelement KE2.

Die vordere Kulisse KV weist bezüglich der Fahrzeuglängsrichtung nach hinten in Schließstellung des Deckels einen Verlauf mit einem vorderen Abschnitt VA auf, in welchem ein Abstand zwischen der vorderen Kulisse KV und dem Deckel D in Fahrzeuglängsrichtung nach hinten gleich bleibt. Weiter weist der Verlauf der vorderen Kulisse KV einen mittleren Abschnitt MA auf, in welchem sich der Abstand zwischen der vorderen Kulisse KV und dem Deckel D vergrößert. Schließlich weist die vordere Kulisse KV einen hinteren Abschnitt HA auf, welcher im Wesentlichen in vertikaler Richtung verläuft. Im Wesentlichen vertikal bedeutet in diesem Zusammenhang, dass die vordere Kulisse KV in dem hinteren Abschnitt HA senkrecht (vertikal) bezüglich einer Längserstreckung der Führungsschiene FS in X-Richtung nach hinten verläuft. Der Verlauf der Längserstreckung Führungsschiene FS kann auch leicht gekrümmt sein, so dass der hintere Abschnitt HA senkrecht bzgl. einer Tangentialebene der Längserstreckung verläuft. Es ist also denkbar, dass der hintere Abschnitt HA wie im Ausführungsbeispiel gezeigt leicht bzgl. der Z-Richtung geneigt ist.

Die hintere Kulisse KH weist in Schließstellung des Deckels D bezüglich der Fahrzeuglängsrichtung nach hinten einen Verlauf auf, welcher sich ebenfalls in mehrere Abschnitte untergliedert. In einem ersten Abschnitt A1 ist der Abstand zwischen der hinteren Kulisse KH und dem Deckel gleich. An den ersten Abschnitt A1 schließt ein zweiter Abschnitt an, in welchem sich der Abstand zwischen der hinteren Kulisse KH und dem Deckel D vergrößert. An den zweiten Abschnitt A2 schließt ein dritter Abschnitt A3 an, in welchem der Abstand zwischen der hinteren Kulisse KH und dem Deckel D im Wesentlichen gleich bleibt. An den dritten Abschnitt A3 schließt ein vierter Abschnitt A4 an, in welchem sich der Abschnitt zwischen dem Deckel und der hinteren Kulisse KH weiter vergrößert. An den vierten Abschnitt A4 schließt sich ein optionaler fünfter Abschnitt A5 an, in welchem die Bahn der hinteren Kulisse KH im Wesentlichen vertikal (analog zu oben) verläuft.

In Schließstellung des Deckels D befindet sich das zweite Koppelelement KE2 des Schlittens S im ersten Abschnitt A1 der hinteren Kulisse KH. Das erste Koppelelement KE1 des Schlittens S befindet sich nicht im Eingriff mit der vorderen Kulisse KV. Dabei ist das erste Koppelelement KE1 im Ausführungsbeispiel in Fahrzeuglängsrichtung oberhalb des Gleitelements GE des Deckelträgers DT angeordnet.

Wird nun der Schlitten S in Öffnungsrichtung, also in X-Richtung, mittels des Antriebs nach hinten verschoben, so bewegt sich der Schlitten S zunächst relativ bezüglich des Deckelträgers DT. Dies liegt daran, dass der Schlitten S in X-Richtung mit dem Deckelträger DT nicht verriegelt ist. Der Deckelträger DT ist über das zweite Koppelelement KE2 des Schlittens S lediglich in Z-Richtung geführt. Bei Verschieben des Schlittens S ausgehend von der Schließstellung des Deckels D bewegt sich das zweite Koppelelement KE2 in den zweiten Abschnitt A2 und daraufhin in den dritten Abschnitt A3 der hinteren Kulisse KH. Dabei wird der Deckel D im Bereich des zweiten Koppelelements KE2 in Z-Richtung angehoben bzw. ausgestellt. Dieser Bereich kann im Übrigen auch als vorderer Bereich des Deckels D bezeichnet werden. Das Anheben erfolgt dabei entsprechend der Änderung des Abstands des Verlaufs der hinteren Kulisse KH. Das erste Koppelelement KE1 wird in Richtung der vorderen Kulisse KV geführt. Dies ist in Figur 4 gezeigt, welche den Deckel D in der Lüfterstellung zeigt.

Durch das Verschieben des Schlittens S ist zudem mittels der Ausstellstange AS der hintere Ausstellhebel HH verschwenkt worden, sodass sich der Deckel D nun in der Lüfterstellung befindet (nicht dargestellt).

Wird der Schlitten S nun weiter verschoben, so koppelt das erste Koppelelement KE1 in die vordere Kulisse KV ein. Sobald das erste Koppelelement KE1 den mittleren Abschnitt MA der vorderen Kulisse KV erreicht, nimmt der Schlitten S den Deckelträger DT in Fahrzeuglängsrichtung nach hinten mit. Dies bedeutet, dass der Deckelträger DT und der Schlitten S praktisch keine Relativbewegung mehr zueinander machen, sondern nur noch eine Relativbewegung in Z-Richtung. Weiter wird der Deckel D im Bereich der Vorderkante VK ausgestellt. Das Ausstellen erfolgt dadurch, dass durch die Mitnahme des Deckelträgers DT mittels des ersten Koppelelements KE1 das Gleitelement GE in der nicht dargestellten fahrzeugfesten Kulisse von der Führungsschiene in vertikaler Richtung weggeführt wird. Das zweite Koppelelement KE2 des Schlittens S befindet sich nun im vierten Abschnitt A4 der hinteren Kulisse KH. Dies ist in Figur 5 gezeigt. Dabei kann die hintere Kulisse KH derart ausgestaltet sein, dass das zweite Koppelelement KE2 unterstützend zu dem ersten Koppelelement KE1 den Deckelträger DT mitnimmt oder aber alternativ nicht mehr im Eingriff mit der hinteren Kulisse KH ist.

In Figur 6 ist ein weiterer Zustand der Anordnung AO gezeigt, bei welcher der Schlitten S weiter nach hinten in Fahrzeuglängsrichtung verschoben wurde. Dabei ist das erste Koppelelement KE1 vollständig in den hinteren Abschnitt HA der vorderen Kulisse KV geführt, wobei eine Relativbewegung zwischen Deckelträger DT und dem Schlitten S endgültig in X-Richtung verriegelt ist. Weiterhin ist der Deckel D im Bereich der Vorderkante VK ausgestellt. Das zweite Koppelelement KE2 kann nun aus der hinteren Kulisse KH über den fünften Abschnitt A5 auskoppeln. Für den Fall, dass das zweite Koppelelement KE2 noch im Eingriff mit der hinteren Kulisse KH ist, kann die hintere Kulisse KH derart ausgebildet sein, dass sich ein Kontakt zwischen dem zweiten Koppelelement KE2 und der hinteren Kulisse KH löst. Beispielsweise verbreitert sich die hintere Kulisse KH in X-Richtung, so dass das zweite Koppelelement KE2 nicht mehr berührend mit der hinteren Kulisse im Eingriff steht.

Durch Vorsehen der beiden Kulissen KH und KV ist es möglich, das Anheben des Deckels D im Bereich seiner Vorderkante VK sowie die Mitnahme des Deckelträgers DT durch den Schlitten S über zwei Kulissen zu steuern. Die hintere Kulisse KH steuert dabei das Anheben des Deckels D im vorderen Bereich, während die vordere Kulisse KV die Mitnahme des Deckels D in X-Richtung mittels des Schlitten S steuert. Dadurch ist es möglich, dass die hintere Kulisse KH in einem hinteren Bereich, insbesondere in dem an den vierten Abschnitt A4 oder fünften Abschnitt A5 anschließenden Bereich, verkürzt werden kann. Dabei ist es nicht zwingend notwendig, einen Abschnitt wie den fünften Abschnitt A5 vorzusehen, welcher im Wesentlichen vertikal (s. oben) verläuft.
Ein weiterer Vorteil der beschrieben Anordnung AO ist, dass die vordere Kulisse KV keine voll ausgebildete Kulissenbahn benötigt. Es ist ausreichend, wenn wie beschrieben das erste Koppelelement KE1 erst dann in die vordere Kulisse KV einkoppelt, wenn der Deckelträger DT von dem Schlitten S mitgenommen werden soll. Es findet somit eine Übergabe von dem zweiten Koppelelement KE2 nach einer Z-Führung des Deckelträgers DT hin zu dem Koppelelement KE1 statt, welches die Mitnahme des Deckelträgers DT in X-Richtung bewirkt.

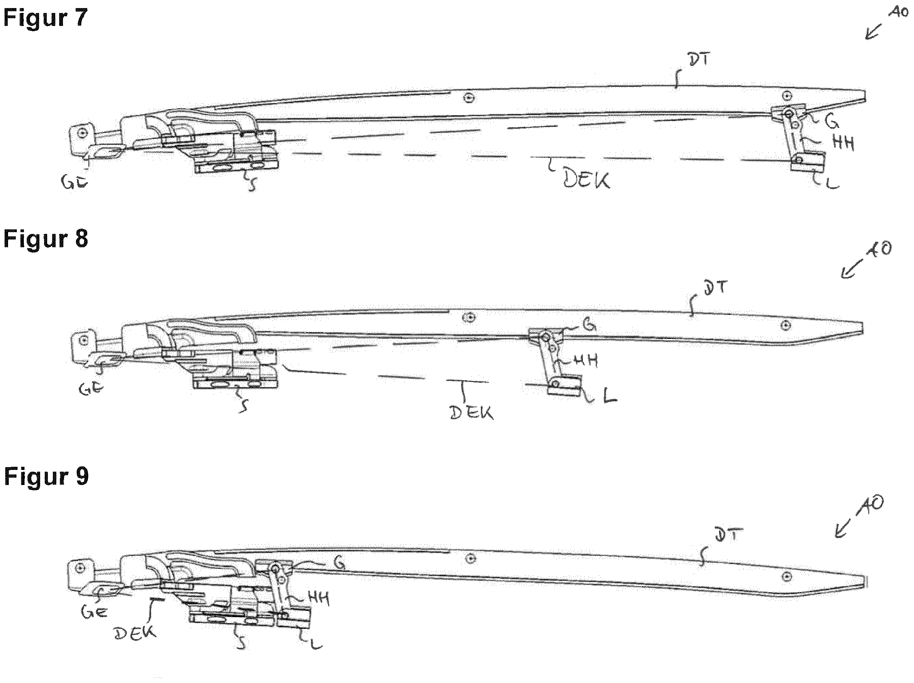

In den Figuren 7 bis 9 ist die Anordnung AO analog zu Figur 2 in einer Gesamtseitenansicht dargestellt. Dabei entspricht der in Figur 7 dargestellte Zustand der Anordnung AO dem in Figur 6 gezeigten Zustand im vorderen Bereich des Deckelträgers DT. Wie insbesondere in Figur 7 zu erkennen ist, befindet sich der hintere Ausstellhebel HH in einer ausgestellten Position. Auf die Ausstellstange AS wurde aus Gründen der Übersichtlichkeit verzichtet.

Wird der Schlitten S ausgehend von der in Figur 7 gezeigten Stellung weiter in Fahrzeuglängsrichtung nach hinten in Richtung des Lagers L verschoben, so wird der Deckelträger DT bezüglich des Gleiters G relativ über das Fahrzeugdach FD geschoben. Beim Verschieben des Schlittens S macht der Deckel D im vorderen Bereich noch eine geringe Bewegung in Z-Richtung. Das weitere Verschieben des Schlittens S ist in den Figuren 8 und 9 dargestellt, wobei der Schlitten S in Figur 9 vollständig nach hinten gefahren worden ist und sich der Deckel D somit in seiner Offenstellung befindet. Die Dachöffnung DOE ist somit maximal freigegeben.

Dadurch, dass das erste Koppelelement KE1 in eingekoppeltem Zustand in der vorderen Kulisse KV sehr nahe an dem Gleitelement GE des Deckelträgers DT angeordnet ist, vollzieht dieses nur einen sehr geringen Hub in Z-Richtung, ausgehend von dem in Figur 7 gezeigten Zustand. Dies liegt vor allem daran, dass sich das erste Koppelelement KE1 nahe an der Spitze eines Dreiecks DEK befindet. Das Dreieck DEK wird durch das Gleitelement GE, eine Schwenkachse zwischen dem Gleiter G und dem hinteren Ausstellhebel HH sowie Schwenkachse zwischen dem hinteren Ausstellhebel HH und dem Lager L gebildet. Dieses Dreieck DEK ist gestrichelt in den Figuren 7 bis 9 dargestellt. Je weiter das die Mitnahme des Deckels D in X-Richtung steuernde Koppelelement (im Ausführungsbeispiel das erste Koppelelement KE1) während der Mitnahme von dem Gleitelement GE entfernt wäre, desto größer wäre der Hub in Z-Richtung beim Freigeben der Dachöffnung DOE. Um diesen Hub zu kompensieren, müsste wie beschrieben die hintere Kulisse KH in Vertikalrichtung deutlich länger ausgebildet sein.

Die Koppelelemente KE1 und KE2 sind als Gleitelemente ausgebildet. Sämtliche dargestellten Teile und Elemente können in ihrer expliziten Formgebung abgeändert und/oder variiert sein, wobei das grundlegende, hier erläuterte mechanische und kinematische Wirkprinzip der Anordnung AO erhalten bleiben soll.

### Bezugszeichenliste

- A1 bis A5: Abschnitt
- AO: Anordnung
- AS: Ausstellstange
- BA: Befestigungsabschnitt
- D: Deckel
- DE: Dachelement
- DEK: Dreieck
- DOE: Dachöffnung
- DRA: Dachrahmenabschnitt
- DT: Deckelträger
- F: Fahrzeug
- FD: Fahrzeugdach
- FS: Führungsschiene
- G: Gleiter
- GE: Gleitelement
- HA: hinterer Abschnitt
- HH: hinterer Ausstellhebel
- HK: hintere Kante
- KH: hintere Kulisse
- KV: vordere Kulisse
- KE1: erstes Koppelelement
- KE2: zweites Koppelelement
- L: Lager
- MA: mittlerer Abschnitt
- S: Schlitten
- VA: vorderer Abschnitt
- VK: Vorderkante

## Patentansprüche

1. Anordnung (AO) mit einem Deckel (D) für ein Fahrzeugdach (FD), der ausgehend von einer Schließstellung zum Verschließen einer Dachöffnung (DOE) zum Öffnen durch Ausstellmittel in seinem hinteren Bereich anhebbar und nach hinten über das Fahrzeugdach (FD) in eine Offenstellung verschiebbar ist, wobei die Ausstellmittel
- einen in Fahrzeuglängsrichtung mittels eines Antriebs in einer Führungsschiene (FS) verschiebbaren Schlitten (S) aufweisen, welcher ein erstes Koppelelement (KE1) und ein zweites Koppelelement (KE2) aufweist; und
- einen mit dem Deckel (D) mechanisch gekoppelten Deckelträger (DT), welcher bezüglich der Fahrzeuglängsrichtung eine vordere Kulisse (KV) und eine hinter der vorderen Kulisse (KV) angeordnete hintere Kulisse (KH) aufweist;
wobei
- in Schließstellung des Deckels (D) das zweite Koppelelement (KE2) im Eingriff mit der hinteren Kulisse (KH) ist derart, dass
ausgehend von der Schließstellung des Deckels (D) bei einem Verschieben des Schlittens (S) in Fahrzeuglängsrichtung nach hinten mittels der hinteren Kulisse (KH) zunächst eine Bewegung des Schlittens (S) relativ zu dem Deckel (D) freigegeben ist sowie ein Ausstellen des Deckels (D) in Vertikalrichtung steuerbar ist, **dadurch gekennzeichnet dass** bei einem weiteren Verschieben das erste Koppelelement (KE1) in die vordere Kulisse (KV) eingekoppelt ist und mittels der vorderen Kulisse (KV) eine Mitnahme des Deckelträgers (DT) durch den Schlitten (S) relativ zur Führungsschiene (FS) steuerbar ist.

2. Anordnung (AO) nach Anspruch 1, wobei die vordere Kulisse (KV) in Schließstellung des Deckels (D) einen Verlauf aufweist, bei welchem ein Abstand zwischen der vorderen Kulisse (KV) und dem Deckel (D) in Fahrzeuglängsrichtung nach hinten zunächst gleich bleibt und sich anschließend verändert.

3. Anordnung (AO) nach Anspruch 2, wobei der Verlauf der vorderen Kulisse (KV) bezüglich der Fahrzeuglängsrichtung nach hinten einen vorderen Abschnitt (VA) aufweist, in welchem ein Abstand zwischen der vorderen Kulisse (KV) und dem Deckel (D) zunächst gleich bleibt, einen mittleren Abschnitt (MA), in welchem sich der Abstand zwischen der vorderen Kulisse (KV) und dem Deckel (D) vergrößert, und einen hinteren Abschnitt (HA) aufweist, welcher in Vertikalrichtung verläuft.

4. Anordnung (AO) nach Anspruch 3, wobei in Lüfterstellung des Deckels (D) sich das erste Koppelelement (KE1) in dem vorderen Abschnitt (VA) der vorderen Kulisse (KV) oder beim Einkoppeln in den vorderen Abschnitt (KV) befindet.

5. Anordnung (AO) nach einem der vorhergehenden Ansprüche, wobei die hintere Kulisse (KH) in Schließstellung des Deckels (D) bezüglich der Fahrzeuglängsrichtung nach hinten einen Verlauf aufweist, bei welchem ein Abstand zwischen der hinteren Kulisse (KH) und dem Deckel (D) in Fahrzeuglängsrichtung nach hinten zunächst gleich bleibt und sich anschließend verändert.

6. Anordnung (AO) nach Anspruch 5, wobei der Verlauf der hinteren Kulisse (KH) bezüglich der Fahrzeuglängsrichtung nach hinten einen ersten Abschnitt (A1) aufweist, in welchem der Abstand zwischen der hinteren Kulisse (KH) und dem Deckel (D) gleich bleibt, und einen an den ersten Abschnitt anschließenden zweiten Abschnitt (A2) aufweist, in welchem sich der Abstand zwischen der hinteren Kulisse (KH) und dem Deckel (D) vergrößert.

7. Anordnung (AO) nach Anspruch 5 oder 6, wobei sich in Schließstellung des Deckels (D) das zweite Koppelelement (KE2) in dem ersten Abschnitt (A1) der hinteren Kulisse (KH) befindet.

8. Anordnung (AO) nach einem der vorhergehenden Ansprüche, wobei das zweite Koppelelement (KE2) in der Offenstellung des Deckels (D) von der hinteren Kulisse (KH) entkoppelt ist.

9. Anordnung (AO) nach einem der vorhergehenden Ansprüche, wobei das erste Koppelelement (KE1) nach der Mitnahme des Deckelträgers (DT) durch den Schlitten (S) nahe in Fahrzeuglängsrichtung hinter einem Gleitelement (GE) des Deckelträgers (DT) angeordnet ist.

10. Anordnung (AO) nach einem der vorhergehenden Ansprüche, wobei die Koppelelemente (KE1, KE2) als Gleitelemente ausgebildet sind, insbesondere als Drehgleiter.

## Claims

1. Arrangement (AO) having a cover (D) for a vehicle roof (FD) which, starting from a closed position for closing a roof opening (DOE), can be raised for opening using deployment means in the rear region thereof and which can be displaced toward the rear over the vehicle roof (FD) into an open position, wherein the deployment means have
- a sliding member (S) which can be displaced in the longitudinal direction of the vehicle by means of a drive in a guide rail (FS) and which has a first coupling element (KE1) and a second coupling element (KE2); and
- a cover carrier (DT) which is mechanically coupled to the cover (D) and which has with respect to the longitudinal direction of the vehicle a front link (KV) and a rear link (KH) which is arranged behind the front link (KV);
wherein
- in the closed position of the cover (D), the second coupling element (KE2) is in engagement with the rear link (KH) in such a manner that,
starting from the closed position of the cover (D) when the sliding member (S) is displaced toward the rear in the longitudinal direction of the vehicle by means of the rear link (KH), a movement of the sliding member (S) relative to the cover (D) is first released and a deployment of the cover (D) in a vertical direction can be controlled, **characterized in that**, in the event of further displacement, the first coupling element (KE1) is coupled into the front link (KV) and by means of the front link (KV) a carrying of the cover carrier (DT) by the sliding member (S) relative to the guide rail (FS) can be controlled.

2. Arrangement (AO) according to Claim 1, wherein the front link (KV) has in the closed position of the cover (D) a path in which a spacing between the front link (KV) and the cover (D) in the longitudinal direction of the vehicle initially remains the same toward the rear and subsequently changes.

3. Arrangement (AO) according to Claim 2, wherein the path of the front link (KV) has with respect to the longitudinal direction of the vehicle toward the rear a front portion (VA) in which a spacing between the front link (KV) and the cover (D) initially remains the same, a central portion (MA) in which the spacing between the front link (KV) and the cover (D) increases and a rear portion (HA) which extends in a vertical direction.

4. Arrangement (AO) according to Claim 3, wherein in the ventilator position of the cover (D) the first coupling element (KE1) is located in the front portion (VA) of the front link (KV) or during coupling in the front portion (KV).

5. Arrangement (AO) according to any one of the preceding claims, wherein the rear link (KH) has in the closed position of the cover (D) with respect to the longitudinal direction of the vehicle toward the rear a path in which a spacing between the rear link (KH) and the cover (D) in the longitudinal direction of the vehicle initially remains the same toward the rear and subsequently changes.

6. Arrangement (AO) according to Claim 5, wherein the path of the rear link (KH) with respect to the longitudinal direction of the vehicle has toward the rear a first portion (A1), in which the spacing between the rear link (KH) and the cover (D) remains the same, and a second portion (A2) which is adjacent to the first portion and in which the spacing between the rear link (KH) and the cover (D) increases.

7. Arrangement (AO) according to Claim 5 or 6, wherein in the closed position of the cover (D), the second coupling element (KE2) is located in the first portion (A1) of the rear link (KH).

8. Arrangement (AO) according to any one of the preceding claims, wherein the second coupling element (KE2) is decoupled from the rear link (KH) in the open position of the cover (D).

9. Arrangement (AO) according to any one of the preceding claims, wherein the first coupling element (KE1) is arranged after the cover carrier (DT) has been carried by the sliding member (S) close in the longitudinal direction of the vehicle behind a sliding element (GE) of the cover carrier (DT).

10. Arrangement (AO) according to any one of the preceding claims, wherein the coupling elements (KE1, KE2) are constructed as sliding elements, in particular as rotary sliding elements.

## Revendications

1. Agencement (AO) comprenant un couvercle (D) pour un toit de véhicule (FD), qui peut être soulevé pour l'ouverture dans sa région arrière par des moyens d'exposition à partir d'une position de fermeture pour fermer une ouverture de toit (DOE) et qui peut être déplacé vers l'arrière au-dessus du toit du véhicule (FD) dans une position d'ouverture, les moyens d'exposition présentant
- un chariot (S) pouvant être déplacé dans un rail de guidage (FS) dans la direction longitudinale du véhicule au moyen d'un entraînement, lequel présente un premier élément de couplage (KE1) et un deuxième élément de couplage (KE2) ; et
- un support de couvercle (DT) accouplé mécaniquement au couvercle (D), qui présente, par rapport à la direction longitudinale du véhicule, une coulisse avant (KV) et une coulisse arrière (KH) disposée derrière la coulisse avant (KV) ;
où
- dans la position de fermeture du couvercle (D), le deuxième élément de couplage (KE2) est en prise avec la coulisse arrière (KH) de telle sorte que
partant de la position de fermeture du couvercle (D) lors d'un déplacement du chariot (S) dans la direction longitudinale du véhicule vers l'arrière au moyen de la coulisse arrière (KH), un déplacement du chariot (S) par rapport au couvercle (D) soit d'abord libéré et qu'une exposition du couvercle (D) dans la direction verticale puisse être commandée,
**caractérisé en ce que**
lors d'un déplacement supplémentaire, le premier élément de couplage (KE1) est accouplé à l'intérieur de la coulisse avant (KV) et un entraînement du support de couvercle (DT) par le chariot (S) par rapport au rail de guidage (FS) peut être commandé au moyen de la coulisse avant (KV) .

2. Agencement (AO) selon la revendication 1, dans lequel la coulisse avant (KV), dans la position de fermeture du couvercle (D), présente un profil avec lequel une distance entre la coulisse avant (KV) et le couvercle (D) dans la direction longitudinale du véhicule vers l'arrière reste tout d'abord inchangée puis varie.

3. Agencement (AO) selon la revendication 2, dans lequel le profil de la coulisse avant (KV) par rapport à la direction longitudinale du véhicule vers l'arrière présente une portion avant (VA) dans laquelle une distance entre la coulisse avant (KV) et le couvercle (D) reste tout d'abord inchangée, une portion centrale (MA) dans laquelle la distance entre la coulisse avant (KV) et le couvercle (D) augmente, et une portion arrière (HA) qui s'étend dans la direction verticale.

4. Agencement (AO) selon la revendication 3, dans lequel, dans la position d'aération du couvercle (D), le premier élément de couplage (KE1) se trouve dans la portion avant (VA) de la coulisse avant (KV) ou, lors de l'accouplement dans la coulisse, se trouve dans la portion avant (KV).

5. Agencement (AO) selon l'une quelconque des revendications précédentes, dans lequel la coulisse arrière (KH), dans la position de fermeture du couvercle (D) par rapport à la direction longitudinale du véhicule vers l'arrière, présente un profil avec lequel une distance entre la coulisse arrière (KH) et le couvercle (D) dans la direction longitudinale du véhicule vers l'arrière reste tout d'abord inchangée puis varie.

6. Agencement (AO) selon la revendication 5, dans lequel le profil de la coulisse arrière (KH) par rapport à la direction longitudinale du véhicule vers l'arrière présente une première portion (A1) dans laquelle la distance entre la coulisse arrière (KH) et le couvercle (D) reste inchangée, et une deuxième portion (A2) se raccordant à la première portion, dans laquelle la distance entre la coulisse arrière (KH) et le couvercle (D) augmente.

7. Agencement (AO) selon la revendication 5 ou 6, dans lequel, dans la position de fermeture du couvercle (D), le deuxième élément de couplage (KE2) se trouve dans la première portion (A1) de la coulisse arrière (KH).

8. Agencement (AO) selon l'une quelconque des revendications précédentes, dans lequel le deuxième élément de couplage (KE2), dans la position d'ouverture du couvercle (D), est désaccouplé de la coulisse arrière (KH).

9. Agencement (AO) selon l'une quelconque des revendications précédentes, dans lequel le premier élément de couplage (KE1), après l'entraînement du support de couvercle (DT) par le chariot (S), est disposé à proximité, dans la direction longitudinale du véhicule, derrière un élément de glissement (GE) du support de couvercle (DT).

10. Agencement (AO) selon l'une quelconque des revendications précédentes, dans lequel les éléments de couplage (KE1, KE2) sont réalisés sous forme d'éléments de glissement, en particulier sous forme de coulisseaux pivotants.
